# EUROPÄISCHE PATENTSCHRIFT

(11) **EP 1 979 542 B1**
(45) Veröffentlichungstag und Bekanntmachung des Hinweises auf die Patenterteilung: **14.04.2010**
(21) Anmeldenummer: 07702707.6
(22) Anmeldetag: 12.01.2007
(51) Int. Cl.: E01B 1/00, E02B 1/00, C08G 18/48

(54) **SCHOTTERKÖRPER SOWIE VERFAHREN ZUR HERSTELLUNG VON SCHOTTERKÖRPERN**
BALLAST BODY AND METHOD FOR PRODUCTION OF BALLAST BODIES
CORPS DE BALLAST ET SON PROCEDE DE FABRICATION

(30) Priorität: 20.01.2006 DE 102006003033
(43) Veröffentlichungstag der Anmeldung: 15.10.2008
(73) Patentinhaber: Bayer MaterialScience AG, 51368 Leverkusen (DE)
(72) Erfinder: HOFFMANN, Andreas, 50733 Köln (DE); EBERT, Heinz-Dieter, 51399 Burscheid (DE); KLESCZEWSKI, Bert, 51069 Köln (DE)
(86) Internationale Anmeldenummer: PCT/EP2007/000234
(87) Internationale Veröffentlichungsnummer: WO 2007/087976

(56) Entgegenhaltungen:
- DD-A- 116 649
- GB-A- 2 361 731
- JP-A- 6 010 301
- US-A- 4 114 382

## Beschreibung

Die vorliegende Erfindung betrifft Schotterkörper sowie ein Verfahren zur Herstellung von Schotterkörpern, die eine hohe Stabilität und lange Nutzungsdauer aufweisen, für den Gleis- und Straßenbau und dem Deichbau aus Schottersteinen und Polyurethanschaumstoffen auf Basis eines Reaktionsgemisches aus ausgewählten Polyisocyanaten und ausgewählten Verbindungen mit gegenüber Isocyanatgruppen reaktionsfähigen Gruppen.

In den letzten Jahren hat die Beanspruchung von Schotterkörpern, welche im Gleis- und Straßenbau eingesetzt werden, stark zugenommen. Eine Ursache hierfür ist sicherlich die allgemeine Zunahme der Mobilität in der Bevölkerung und des Verkehrs von Gütern. Insbesondere im Schienenverkehr fahren immer häufiger Züge mit hoher Geschwindigkeit und Achsenlast. Die hierdurch bedingten enormen Verschiebungskräfte werden über die Schienen auf die Schwellen und von dort auf den Schotterkörper übertragen. Im Laufe der Zeit verändert sich das Steingebilde und einzelne Schottersteine werden verdreht, verlagert und abgerundet, so dass die Lage der Gleise verändert wird und in regelmäßigen Abständen kosten- und zeitintensive Reparaturarbeiten durchgeführt werden müssen.

In der Vergangenheit wurden bereits verschiedene Verfahren zur Befestigung von Schotterkörpern unter Einbeziehung von Kunststoffen beschrieben (DD86201, DE-A 2063727, DE-A 2305536, DE-A 3941142, DE-A 19711437, DE-A 19651755, DE-A 3821963, DE-A 19811838, JP-A 08157552).

DE-A 2063727 beschreibt ein Verfahren zur Reduktion von Gleisverwerfungen durch Querverschiebungskräfte. Hierbei wird das Bindemittel in Form eines hochviskosen Kunststoffes auf das Schotterbett gesprüht und die Schottersteine an den Berührungsstellen verklebt. Alternativ kann eine flächige Verklebung der Schottersteine durch Injektion des Bindemittels in Form eines 2-Komponenten-Kunstharzes realisiert werden.

In DE-A 2305536 wird ein Verfahren zum Heben von Gleisschwellen und Straßenbelägen durch Einbringen eines Quellkörpers beschrieben, welcher sich nach dem Einbringen verfestigt. Es handelt sich beispielsweise um einen Mehrkomponenten-Kunststoff, z.B. Polyurethanschaum. Die Applikation des flüssigen Kunststoffes erfolgt mittels einer Füllsonde durch ein Loch in der Gleisschwelle.

JP-A 8157552 beschreibt die Herstellung von Polyurethan-Harzen, welche in Gegenwart von Feuchtigkeit aushärten und zur Stabilisierung von Steinanhäufungen eingesetzt werden. Die Polyurethan-Harze werden unter Verwendung von aromatischen Polyisocyanaten, monofunktionellen Polyethern und Amino - gestarteten Polyethern hergestellt und mittels Sprühverfahren appliziert.

GB 2 361 731 beschreibt ein Verfahren zur Befestigung von Schotterkörpern unter Einbeziehung von elastischen Polyurethanschaumstoffen. OH-Zahlen der Polyethern oder Kennzahlen der Reaktionsgemsiche werden nicht erwähnt.
US 4 114 382 offenbart Polyurethanschaumzusammensetzungen zur Befestigung von Gestein oder Steinkohlen. Die hierzu verwendete Polyetherpolyolen weisen einen OH-Zahl auf von mehr als 300.

Allen bekannten Verfahren gemeinsam ist, dass sie zu Schotterkörpern führen, die nur in unselektiver Art und Weise mit Hilfe von Kunststoffen stabilisiert werden können. Darüber hinaus greifen die beschriebenen Verfahren in einigen Fällen auf eine relative komplizierte Applikationstechnik zurück.

Aufgabe der vorliegenden Erfindung war es daher, ein verbessertes Verfahren zur Herstellung von Schotterkörpern zur Verfügung zu stellen, welches eine Stabilisierung des Schotterkörpers ermöglicht und gleichzeitig eine lange Nutzungsdauer gewährleistet.

Die erfindungsgemäße Aufgabe konnte überraschenderweise mit der Bereitstellung des nachstehend beschriebenen erfindungsgemäßen Verfahrens gelöst werden.

Gegenstand der Erfindung ist ein Verfahren zur Herstellung von Schotterkörpern für den Gleisbau und Straßenbau und Deichbau, wobei
1) Schottersteine zu einem Schotterkörper aufgeschüttet werden und
2) zwischen die aufgeschütteten Schottersteine ein Reaktionsgemisch zur Herstellung eines Polyurethanschaumstoffes appliziert wird, wobei das Reaktionsgemisch erhältlich ist aus
   a) ein oder mehreren Isocyanatverbindungen aus der Gruppe bestehend aus Polyisocyanaten mit einem NCO-Gehalt von 28 bis 50 Gew.-% und NCO-Prepolymeren mit einem NCO-Gehalt von 10 bis 48 Gew.-% aus Polyisocyanaten mit einem NCO-Gehalt von 28 bis 50 Gew.-% und Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 oder Gemischen daraus und
   b) einer Polyolkomponente bestehend aus einem oder mehreren Polyetherpolyolen mit einer Hydroxylzahl von 6 bis 112 und einer Funktionalität von 1,8 bis 8 in Gegenwart von
   c) 0 bis 26 Gew.-%, bezogen auf die Reaktionskomponenten b) bis g), eines oder mehrerer Kettenverlängerungsmittel mit einer Hydroxyl- oder Aminzahl von 245 bis 1850 und einer Funktionalität von 1,8 bis 8,
   d) 0,05 bis 5 Gew.-%, bezogen auf die Reaktionskomponenten b) bis g), eines oder mehrerer Treibmittel,
   e) 0 bis 5 Gew.-%, bezogen auf die Reaktionskomponenten b) bis g), eines oder mehrerer Katalysatoren,
   f) 0 bis 50 Gew.-%, bezogen auf die Reaktionskomponenten b) bis g), eines oder mehrerer Füllstoffe und
   g) 0 bis 25 Gew.-%, bezogen auf die Reaktionskomponenten b) bis g), eines oder mehrerer Hilfs- und/oder Zusatzstoffe,
wobei die Kennzahl des Reaktionsgemisches im Bereich von 70 bis 130 liegt.

Unter Kennzahl wird das Äquivalentverhältnis von NCO-Gruppen zu OH-Gruppen und NH-Gruppen multipliziert mit 100 verstanden. So bedeutet z.B. eine Kennzahl von 110, dass auf eine reaktive OH-Gruppe oder NH-Gruppe 1,1 reaktive NCO-Gruppen aus den Isocyanatverbindungen oder auf eine reaktive NCO-Gruppe aus den Isocyanatverbindungen 0,91 reaktive OH-Gruppen bzw. NH-Gruppen vorliegen.

Die Komponenten zur Herstellung der Polyurethanschaumstoffe werden in einem Mischungsverhältnis eingesetzt, welches eine homogene Vermischung der Komponenten, insbesondere beim Einsatz von Hochdruckmaschinen, erlaubt. Durch die Verwendung von Hochdruckmaschinen lassen sich auch schnell reagierende PUR - Systeme verarbeiten und somit ein wirtschaftliches Verfahren realisieren. Durch Einsatz der im nachfolgenden näher beschriebenen Rohstoffe lassen sich zudem die Verarbeitungseigenschaften des PUR-Systems entsprechend den Anforderungen optimal einstellen. So ist eine Teilverschäumung des Schotterkörpers unter Anwendung der Gießtechnik als Applikationsmethode realisierbar. Darüber hinaus lassen sich die mechanischen Eigenschaften der eingesetzten Polyurethanschäume in weiten Grenzen variieren. Die Vorteile der eingesetzten PUR-Schäume sind gute Stauchkräfte (bei 10% Stauchung) (≥ 10,0 N), gute Stauchhärten (bei 10% Stauchung) (≥ 1,0 kPa) und Zugfestigkeiten (≥ 0,1 MPa) bei geringer dauerhafter Verformung (DVR (40%, 25°C, 5 min) ≤ 0,01 %).

Die Polyurethanschäume werden vorzugsweise in Gegenwart von Kettenverlängerern und Katalysatoren hergestellt. Hierbei werden bevorzugt Katalysatoren verwendet, welche primäre und /oder sekundäre Hydroxyl- und/oder Aminogruppen besitzen. Die auf diese Weise erhaltenen Polyurethane weisen ein verbessertes Emissionsverhalten auf und zeichnen sich, nach Extraktion mit Lösungsmitteln (zum Beispiel Wasser), durch einen verringerten Anteil an mobilisierbaren Inhaltstoffen aus. Die erfindungsgemäßen Polyurethanschäume können gegebenenfalls zusätzlich aus der Polyurethanchemie an sich bekannte Füllstoffe sowie Hilfs- und Zusatzstoffe enthalten.

Ein weiterer Gegenstand der vorliegenden Erfindung sind Schotterkörper aus Polyurethan-Schaumstoff und Schottersteinen, die dadurch gekennzeichnet sind, dass der zwischen den Schottersteinen befindliche Polyurethanschaumstofferhältlich ist aus
a) ein oder mehreren Isocyanatverbindungen aus der Gruppe bestehend aus Polyisocyanaten mit einem NCO-Gehalt von 28 bis 50 Gew.-% und NCO-Prepolymeren mit einem NCO-Gehalt von 10 bis 48 Gew.-% aus Polyisocyanaten mit einem NCO-Gehalt von 28 bis 50 Gew.-% und Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 oder Gemischen daraus und
b) einer Polyolkomponente bestehend aus einem oder mehreren Polyetherpolyolen mit einer Hydroxylzahl von 6 bis 112 und einer Funktionalität von 1,8 bis 8 in Gegenwart von
c) 0 bis 26 Gew.-%, bezogen auf die Reaktionskomponenten b) bis g), eines oder mehrerer Kettenverlängerungsmittel mit einer Hydroxyl- oder Aminzahl von 245 bis 1850 und einer Funktionalität von 1,8 bis 8, und
d) 0,05 bis 5 Gew.-%, bezogen auf die Reaktionskomponenten b) bis g), eines oder mehrerer Treibmittel,
e) 0 bis 5 Gew.-%, bezogen auf die Reaktionskomponenten b) bis g), eines oder mehrerer Katalysatoren,
f) 0 bis 50 Gew.-%, bezogen auf die Reaktionskomponenten b) bis g), eines oder mehrerer Füllstoffe und
g) 0 bis 25 Gew.-%, bezogen auf die Reaktionskomponenten b) bis g), eines oder mehrerer Hilfs- und/oder Zusatzstoffe,
wobei die Kennzahl des Reaktionsgemisches im Bereich von 70 und 130 liegt.

Das Reaktionsgemisch zur Herstellung des Polyurethanschaums wird im Hinblick auf die Verarbeitung so eingestellt, dass es unter Verwendung einer einfachen Applikationstechnik (zum Beispiel Gießverfahren) verwendet werden kann. Beispielsweise kann durch gezielte Einstellung der Reaktivität des Reaktionsgemisches eine Teilverschäumung der Schotterkörper durchgeführt werden. Eine solche Teilverschäumung erlaubt einerseits die selektive Verstärkung in besonders belasteten Teilbereichen des Schotterkörpers (zum Beispiel Kurven, Lastenabtragungsbereiche) und ermöglicht andererseits den ungestörten Abfluss von Flüssigkeiten, wie zum Beispiel Wasser. Eine zu langsame Reaktion würde dazu führen, dass das Reaktionsgemisch in den Boden oder in seitliche Bereiche des Schotterbettes abfließt. Eine zu schnelle Reaktion würde dazu führen, dass das Reaktionsgemisch nicht bis in eine ausreichende Schichttiefe des Schüttgutes eindringt. Zum Beispiel sollte für ein Gleissystem mit ca. 40 cm Schotterhöhe die Startzeit des Reaktionsgemisches 1 bis 15 Sekunden, vorzugsweise 1 bis 5 Sekunden, und die Verfestigungszeit (Abbindezeit) 15 bis 45 Sekunden, vorzugsweise 15 bis 30 Sekunden, betragen, wobei längere Verfestigungszeiten möglich aber unwirtschaftlich wären.

Der eingesetzte Polyurethanschaum sollte vorzugsweise eine Stauchkraft (bei 10% Stauchung) von mindestens 10,0 N, eine Stauchhärte (bei 10% Stauchung) von mindestens 1,0 kPa und eine Zugfestigkeit von mindestens 0,1 MPa aufweisen. Darüber hinaus sollte er bevorzugt einen Druckverformungsrest (DVR) (40 %, 25°C, 5 min) von höchstens 0,01 % und eine gute Witterungs- bzw. Hydrolysestabilität aufweisen. Der eingesetzte Polyurethanschaum sollte sich weiterhin durch einen möglichst geringen Anteil an emittierbaren sowie mobilisierbaren Inhaltstoffen auszeichnen.

Bei den verwendeten Polyisocyanaten a) handelt es sich um (cyclo)aliphatische oder aromatische Polyisocyanate. Bevorzugt handelt es sich um Toluylendiisocyanat, Di- und/oder Polyisocyanate der Diphenylmethanreihe, welche einen NCO-Gehalt von 28 bis 50 Gew.-% aufweisen. Hierzu gehören bei Raumtemperatur flüssige und gegebenenfalls entsprechend modifizierte Gemische von 4,4'-Diisocyanatodiphenylmethan mit 2,4'- und in geringem Umfang gegebenenfalls 2,2'-Diisocyanatodiphenylmethan. Gut geeignet sind auch bei Raumtemperatur flüssige Polyisocyanatgemische der Diphenylmethanreihe, die neben den genannten Isomeren deren höhere Homologe enthalten, und die in an sich bekannter Weise durch Phosgenierung von Anilin/Formaldehyd-Kondensaten zugänglich sind. Auch Urethan- bzw. Carbodiimidgruppen und/oder Allophanat- bzw. Biuretgruppen aufweisende Modifizierungsprodukte dieser Di- und Polyisocyanate sind geeignet.

Ebenfalls geeignet sind NCO-Prepolymere als Komponente a) mit einem NCO-Gehalt von 10 bis 48 Gew.-%. Sie werden aus den vorgenannten Polyisocyanaten und Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 oder Gemischen daraus hergestellt.

Bei den Komponenten b) handelt es sich um Polyhydroxypolyether, welche auf an sich bekannte Weise durch Polyaddition von Alkylenoxiden an polyfunktionelle Starterverbindungen in Gegenwart von Katalysatoren hergestellt werden können. Bevorzugt werden die Polyhydroxypolyether aus einer Starterverbindung mit durchschnittlich 2 bis 8 aktiven Wasserstoffatomen und einem oder mehreren Alkylenoxiden hergestellt. Bevorzugte Starterverbindungen sind Moleküle mit zwei bis acht Hydroxylgruppen pro Molekül wie Wasser, Ethylenglykol, Propylenglykol, Diethylenglykol, Dipropylenglykol, Triethylenglykol, Tripropylenglykol, 1,4-Butandiol, 1,6-Hexandiol, Triethanolamin, Glycerin, Trimethylolpropan, Pentaerythrit, Sorbit und Saccharose. Die Starterverbindungen können allein oder im Gemisch verwendet werden. Die Polyole b) werden aus einem oder mehreren Alkylenoxiden hergestellt. Bevorzugt verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch und/oder blockweise umzusetzen. Ebenfalls geeignet sind solche höhermolekularen Polyhydroxypolyether, in denen hochmolekulare Polyaddukte bzw. Polykondensate oder Polymerisate in feindisperser, gelöster oder aufgepropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen b) ablaufen lässt (wie beispielsweise in DE-AS 1 168 075 beschrieben). Auch durch Vinylpolymerisate modifizierte Polyhydroxylverbindungen, wie sie z.B. durch Polymerisation von Styrol und Acrylnitril in Gegenwart von Polyethern (z.B. gemäß US-PS 3 383 351) erhalten werden, sind für das erfindungsgemäße Verfahren als Polyolkomponente b) geeignet. Vertreter der genannten Komponente b) sind z.B. im Kunststoff-Handbuch, Band VII "Polyurethane", 3. Auflage, Carl Hanser Verlag, München / Wien, 1993, Seiten 57 - 67 bzw. Seiten 88 - 90 beschrieben.

Bevorzugt werden als Polyolkomponente b) ein oder mehrere Polyhydroxypolyether eingesetzt, die eine Hydroxylzahl von 6 bis 112, vorzugsweise von 21 bis 56, und eine Funktionalität von 1,8 bis 8, vorzugsweise von 1,8 bis 6, aufweisen.

Als Kettenverlängerungsmittel c) eignen sich solche, deren mittlere Hydroxyl- oder Aminzahl bei 245 bis 1850 und deren Funktionalität bei 1,8 bis 8, bevorzugt bei 1,8 bis 3, liegt. Beispielhaft zu nennen sind hier Ethylenglykol, Propylenglykol, Diethylenglykol, Dipropylenglykol, 1,4-Butandiol, 1,6-Hexandiol, Triethanolamin, Glycerin, Trimethylolpropan und kurzkettige Alkoxylierungsprodukte. Die Komponente c) wird vorzugsweise in Mengen von 0 bis 26 Gew.-%, bezogen auf die Reaktionskomponenten b) bis g), verwendet. Ethylenglykol, 1,4-Butandiol, das Propoxylierungsprodukt von Trimethylolpropan (OHZ: 550) sowie Gemische aus Triethanolamin und Diisopropanolamin (OHZ: 1160) werden besonders bevorzugt eingesetzt.

Als Treibmittel d) sind sowohl physikalische Treibmittel als auch Wasser einsetzbar. Bevorzugte physikalische Treibmittel d) sind 1,1-Difluorethan (HFC-152a), 1,1,1,2-Tetrafluorethan (HFC-134a), 1,1,1,2,3,3,3,-Heptafluorpropan (HFC-227ea), 1,1,1,3,3-Pentafluorpropan (HFC-245fa), 1,1,1,3,3-Pentafluorbutan (HFC-365mfc), n-Pentan, i-Pentan, i-Hexan oder Gemische daraus. Besonders bevorzugt wird Wasser als Komponente d) eingesetzt. Die Treibmittel können alleine oder in Kombination eingesetzt werden und liegen in Mengen von 0,05 bis 5 Gew.-%, besonders bevorzugt in Mengen von 0,3 bis 3,5 Gew.-%, bezogen auf die Reaktionskomponenten b) bis g), vor.

Die an sich langsam ablaufende Reaktion zwischen Isocyanat- und Hydroxylgruppen kann durch Zusatz von einem oder mehreren Katalysatoren e) beschleunigt werden. Dabei kommen insbesondere tertiäre Amine der an sich bekannten Art in Frage, z.B. Triethylamin, Tributylamin, N-Methylmorpholin, N-Ethylmorpholin, N-Cocomorpholin, N,N,N',N'-Tetramethylethylendiamin, 1,4-Diazabicyclo[2.2.2]octan, N-Methyl-N'-dimethylaminoethylpiperazin, N,N-Dimethylcyclohexylamin, N,N,N',N'-Tetramethyl-1,3-butandiamin, N,N-Dimethylimidazol-β-phenylethylamin, 1,2-Dimethylimidazol, Bis(2-dimethylaminoethyl)ether oder 2-Methylimidazol. Auch organische Metallkatalysatoren, wie organische Wismutkatalysatoren, z.B. Wismut-(III)-neodecanoat oder organische Zinnkatalysatoren, z.B. Zinn-(II)-salze von Carbonsäuren, wie Zinn-(II)-acetat, Zinn-(II)-octoat, Zinn-(II)-ethylhexoat und Zinn-(II)-laurat und die Dialkylzinnsalze von Carbonsäuren, z.B. Dibutylzinndiacetat, Dibutylzinndilaurat, Dibutylzinnmaleat oder Dioctylzinndiacetat können allein oder in Kombination mit den tertiären Aminen verwendet werden. Bevorzugt werden Katalysatoren verwendet, welche primäre und/oder sekundäre Hydroxyl- und/oder Aminogruppen besitzen. Dabei kommen sowohl einbaubare Amine als auch einbaubare organische Metallkatalysatoren der an sich bekannten Art in Frage, z.B. N-(3-Dimethylaminopropyl)-N,N-diisopropanolamin, N,N,N'-Trimethyl-N'-hydroxyethyl-bisaminoethylether, Tetramethyldipropylentriamin, 3-(Dimethylamino)propylharnstoff, Zinnricinoleat. Die Katalysatoren können allein oder in Kombination verwendet werden. Vorzugsweise werden 0 bis 5,0 Gew.-%, besonders bevorzugt 0,5 bis 5,0 Gew.-%, Katalysator bzw. Katalysatorkombination, bezogen auf die Reaktionskomponenten b) bis g) eingesetzt. Weitere Vertreter von Katalysatoren sowie Einzelheiten über die Wirkungsweise der Katalysatoren sind im Kunststoff-Handbuch, Band VII "Polyurethane", 3. Auflage, Carl Hanser Verlag, München / Wien, 1993 auf den Seiten 104 - 110 beschrieben.

Gegebenenfalls mitzuverwendende Füllstoffe f) können sowohl anorganische als auch organische Füllstoffe sein. Als anorganische Füllstoffe seien beispielhaft genannt: silikatische Mineralien, wie Schichtsilikate, Metalloxide wie Eisenoxide, pyrogen hergestellte Metalloxide wie Aerosile, Metallsalze wie Schwerspat, anorganische Pigmente wie Cadmiumsulfid, Zinksulfid sowie Glas, Mikroglaskugeln, Mikroglashohlkugeln, u.a. Verwendet werden können natürliche und synthetische faserförmige Mineralien, wie Wollastonit und Glasfasern verschiedener Länge, die gegebenenfalls geschlichtet sein können. Als organische Füllstoffe seien beispielhaft genannt: kristalline Paraffine oder Fette, Pulver auf Basis von Polystyrol, Polyvinylchlorid, Harnstoff-Formaldehyd-Massen und/oder Polyhydrazodicarbonamiden (z.B. aus Hydrazin und Toluylendiisocyanat). Es können auch Mikrohohlkugeln organischer Herkunft oder Kork eingesetzt werden. Die organischen bzw. anorganischen Füllstoffe können einzeln oder als Gemische verwendet werden. Die Füllstoffe f) werden bevorzugt in Mengen von 0 bis zu 50 Gew.-%, vorzugsweise von 0 bis zu 30 Gew.-%, bezogen auf die Reaktionskomponenten b) bis g), zugegeben.

Zu den Hilfs- und Zusatzstoffen g), die gegebenenfalls mitverwendet werden, gehören beispielsweise Stabilisatoren, färbende Agenzien, Flammschutzmittel, Weichmacher und/oder einwertige Alkohole.

Als Stabilisatoren werden insbesondere oberflächenaktive Substanzen, d.h. Verbindungen eingesetzt, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Rizinusölsulfate oder Fettsäuren sowie Salze von Fettsäuren mit Aminen, Schaumstabilisatoren, wie Siloxanoxalkylengemischpolymerisate, und Zellregulatoren, wie Paraffine. Als Stabilisatoren kommen vorwiegend Organopolysiloxane zur Anwendung, welche wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden vorzugsweise in Mengen von 0,01 bis 5,0 Gew.-%, bevorzugt von 0,1 bis 1,5 Gew.-%, bezogen auf die Reaktionskomponenten b) bis g), zugegeben.

Als färbende Agenzien können für die Einfärbung von Polyurethanen an sich bekannte Farbstoffe und/oder Farbpigmente auf organischer und/oder anorganischer Basis, beispielsweise Eisenoxid- und/oder Chromoxidpigmente und Pigmente auf Phthalocyanin- und/oder Monoazo-Basis eingesetzt werden.

Geeignete, gegebenenfalls mitzuverwendende Flammschutzmittel sind beispielsweise Trikresylphophat, Tris-2-chlorethylphosphat, Tris-chlorpropylphosphat und Tris-2,3-dibrompropylphosphat. Außer den bereits genannten halogensubstituierten Phosphaten können auch anorganische Flammschutzmittel, wie Aluminiumoxidhydrat, Ammoniumpolyphosphat, Calciumsulfat, Natriumpolymetaphosphat oder Aminphosphate, z.B. Melaminphosphate, verwendet werden.

Als Weichmacher seien beispielsweise Ester von mehrwertigen, vorzugsweise zweiwertigen Carbonsäuren mit einwertigen Alkoholen genannt. Die Säurekomponente solcher Ester kann sich z.B. herleiten von Bernsteinsäure, Isopthalsäure, Trimellitsäure, Phthalsäureanhydrid, Tetra- und/oder Hexahydrophthalsäureanhydrid, Endomethylentetrahydrophthalsäureanhydrid, Glutarsäureanhydrid, Maleinsäureanhydrid, Fumarsäure und/oder dimeren und/oder trimeren Fettsäuren, gegebenenfalls in Mischung mit monomeren Fettsäuren. Die Alkoholkomponente solcher Ester kann sich z.B. herleiten von verzweigten und/oder unverzweigten aliphatischen Alkoholen mit 1 bis 20 C-Atomen, wie Methanol, Ethanol, Propanol, Isopropanol, n- Butanol, sek.-Butanol, tert.-Butanol, den verschiedenen Isomeren des Pentylalkohols, Hexylalkohols, Octylalkohols (z.B. 2-Ethyl-Hexanol), Nonylalkohols, Decylalkohols, Laurylalkohols, Myristylalkohols, Cetylalkohols, Stearylalkohols und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispielsweise Cyclohexanol und dessen Homologe Phenol, Kresol, Thymol, Carvacrol, Benzylalkohol und/oder Phenylethanol. Als Weichmacher kommen außerdem Ester der obengenannten Alkohole mit Phosphorsäure in Frage. Gegebenenfalls können auch Phosphorsäureester aus halogenierten Alkoholen, wie z.B. Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren eingesetzt werden. Bei den Weichmachern kann es sich auch um sogenannte polymere Weichmacher handeln, z.B. um Polyester der Adipin-, Sebacin- und/oder Phthalsäure. Weiter sind auch Alkylsulfonsäureester des Phenols, z.B. Paraffinsulfonsäurephenylester, als Weichmacher verwendbar.

Weitere, gegebenenfalls mitzuverwendende Hilfs- und/oder Zusatzstoffe g) sind einwertige Alkohole wie Butanol, 2-Ethylhexanol, Octanol, Dodecanol oder Cyclohexanol, die gegebenenfalls zwecks Herbeiführung eines gewünschten Kettenabbruchs mit verwendet werden können.

Die Hilfs- und/oder Zusatzstoffe g) werden vorzugsweise in Mengen von 0 bis 25 Gew.-%, besonders bevorzugt von 0 bis 10 Gew.-%, bezogen auf die Reaktionskomponenten b) bis g), zugegeben. Nähere Angaben über die üblichen Hilfs- und Zusatzstoffe g) sind der Fachliteratur, beispielsweise dem Kunststoff-Handbuch, Band VII "Polyurethane", 3. Auflage, Carl Hanser Verlag, München / Wien, 1993, Seite 104 ff. zu entnehmen.

Die Herstellung der Polyurethanschaumstoffe kann prinzipiell auf verschiedene Weise erfolgen. Man kann beispielsweise nach dem one-shot- oder dem Prepolymer-Verfahren arbeiten. Beim one-shot - Verfahren werden alle Komponenten, z.B. Polyole, Polyisocyanate, Kettenverlängerer, Treibmittel, Katalysatoren, Füll- und/oder Zusatzstoffe zusammengegeben und intensiv miteinander vermischt. Beim Prepolymer-Verfahren stellt man zunächst ein NCO-Prepolymer her, indem man einen Teil der Polyolmenge mit der gesamten Polyisocyanatmenge umsetzt, fügt dann dem erhaltenen NCO-Prepolymer die restliche Menge an Polyol sowie gegebenenfalls Kettenverlängerer, Treibmittel, Katalysator, Füll- und/oder Zusatzstoffe zu und mischt intensiv. Besonders bevorzugt im Sinne der vorliegenden Erfindung ist ein Verfahren, bei dem die Komponenten b) bis g) zu einer so genannten "Polyolkomponente" abgemischt werden, die dann mit dem Polyisocyanat und/oder NCO-Prepolymer a) verarbeitet wird. Die gegebenenfalls mit zu verwendenden Kettenverlängerer, Treibmittel, Katalysatoren, Füllstoffe sowie Hilfs- und/oder Zusatzstoffe werden wie oben beschrieben im Allgemeinen der "Polyolkomponente" zugesetzt, jedoch ist dies nicht zwingend erforderlich, da mit der Polyisocyanatkomponente a) verträgliche, nicht mit ihr reagierende Komponenten auch dieser einverleibt werden können.

Das bei der Durchmischung der Reaktionskomponenten entstehende Gemisch wird beispielsweise nach dem Gießverfahren auf die Schottersteine aufgebracht. Hierbei erfolgt die Förderung, Dosierung und Mischung der Einzelkomponenten oder der Komponentengemische mit den in der Polyurethan-Chemie an sich bekannten Vorrichtungen. Die Menge des eingetragenen Gemisches wird im allgemeinen so bemessen, dass der Polyurethanschaum eine Freischaumdichte von 20 bis 800 kg/m³, bevorzugt 30 bis 600 kg/m³, besonders bevorzugt von 50 bis 300 kg/m³, aufweist. Als Ausgangstemperatur des auf die Schottersteine aufgebrachten Reaktionsgemisches wird im Allgemeinen ein Bereich von 20 bis 80°C, vorzugsweise 25 bis 40°C, gewählt. Die Schottersteine werden gegebenenfalls vor dem Einbringen das Reaktionsgemisches getrocknet und erwärmt. In Abhängigkeit von den Reaktionskomponenten, den zugegebenen Katalysatoren und der Temperaturführung kann die Zeit bis zur Verfestigung des Schaums (Abbindezeit) von 15 bis 45 Sekunden, bevorzugt von 15 bis 30 Sekunden, betragen. Längere Verfestigungszeiten sind möglich, aber unwirtschaftlich.

Die Erfindung soll anhand der nachfolgenden Beispiele näher erläutert werden.

### Beispiele

In den Beispielen 1 bis 9 wurden die folgenden Polyole und NCO-Prepolymere eingesetzt:
- Polyol 1:: Polyetherpolyol, hergestellt durch Propoxylierung von 1,2-Propylenglykol und anschließender Ethoxylierung; OH-Zahl: 28.
- Polyol 2:: Polyetherpolyol, hergestellt durch Propoxylierung von Glycerin und anschließender Ethoxylierung; OH-Zahl: 35.
- Polyol 3:: Polyetherpolyol, hergestellt durch Propoxylierung von Glycerin und anschließender Ethoxylierung; OH-Zahl: 27,5.
- Polyol 4:: Polyetherpolyol, hergestellt durch Propoxylierung von Glycerin und anschließender Ethoxylierung; OH-Zahl: 28.
- Polyol 5:: Polyetherpolyol, hergestellt durch Propoxylierung von Sorbit und anschließender Ethoxylierung; OH-Zahl: 28,5.
- Polyol 6:: Desmophen^{®}VP.PU7619W (Produkt von Bayer MaterialScience AG; OH-Zahl: 28; Viskosität (bei 25°C): 3600 mPa.s; Füllstoff-haltiges Polyetherpolyol (Polyharnstoff-Dispersion (PHD), Füllstoffgehalt: ca. 20%), hergestellt durch Propoxylierung von Glycerin und anschließender Ethoxylierung).
- Kettenverlängerer 1:: Polyetherpolyol, hergestellt durch Propoxylierung von Trimethylolpropan; OH-Zahl: 550.
- Kettenverlängerer 2:: 1,4-Butandiol; OH-Zahl: 1245.
- Kettenverlängerer 3:: Monoethylenglykol; OH-Zahl: 1813.
- Kettenverlängerer 4:: Gemisch aus Triethanolamin (55Gew.-%) und Diisopropanolamin (45Gew.-%); OH-Zahl: 1160.
- Katalysator 1:: Dibutylbis[dodecylthio]stannan (Fomrez^{®}UL1, GE Bayer Silicones)
- Katalysator 2:: Bis(dimethylaminoethyl)ether (NIAX^{®}A-1, GE Bayer Silicones)
- Katalysator 3:: Triethylendiamin (Dabco^{®}S-25, Air Products)
- Katalysator 4:: Zinnoktoat (Addocat^{®}SO, Rhein Chemie Rheinau)
- Katalysator 5:: Triethylendiamin (Dabco^{®}33-LV, Air Products)
- Katalysator 6:: Zinnricinoleat (Kosmos^{®}EF, Goldschmidt)
- Katalysator 7:: N,N,N'-Trimethyl-N'-hydroxyethyl-bisaminoethylether (Jeffcat^{®}ZF-10, Huntsman)
- Stabilisator 1:: TEGOSTAB^{®}B8719LF(Goldschmidt AG; organomodifiziertes Polysiloxan)
- Stabilisator 2:: TEGOSTAB^{®}B8681LF(Goldschmidt AG; organomodifiziertes Polysiloxan)
- Isocyanat 1:: Desmodur^{®}VP.PU10IS14 (Bayer MaterialScience AG; NCO-Gehalt: 19,8%, Viskosität (25°C): 700 mPa.s; NCO-Prepolymer auf Basis 4,4'-MDI, Carbodiimid-modifiziertem 4,4'-MDI und Polyoxyalkylenpolyol, OH-Zahl:164).
- Isocyanat 2:: Desmodur^{®}PA09 (Bayer MaterialScience AG, NCO-Gehalt: 24,5%, Viskosität (25°C): 440mPa.s; NCO-Prepolymer auf Basis eines MDI-Gemisches, welches durch Phosgenierung von Anilin/Formaldehyd-Kondensaten erhalten wird, und Polyoxyalkylendiolen, OH-Zahl: 515).
- Isocyanat 3:: Desmodur^{®}VP.PU1805 (Bayer MaterialScience AG; NCO-Gehalt: 28,4%, Viskosität (25°C): 91mPa.s; NCO-Prepolymer auf Basis eines MDI-Gemisches, welches durch Phosgenierung von Anilin/Formaldehyd-Kondensaten erhalten wird, und einem Polyetherpolyol, OH-Zahl: 28)
- Isocyanat 4:: Desmodur^{®}T80 (Bayer MaterialScience AG; NCO-Gehalt: 48%, Viskosität (25°C): 3mPa.s; Gemisch aus 2,4-TDI und 2,6-TDI).

### Durchführung

Zur Herstellung der so genannten "Polyolkomponente" wurden zunächst x Gew.-Teile Polyetherpolyol und gegebenenfalls Kettenverlängerer, Katalysator, Stabilisator und Treibmittel (Mischungsverhältnisse siehe Tabelle 1) homogenisiert. Dann wurden x Gew.-Teile Polyisocyanat (Mischungsverhältnisse siehe Tabelle 1) zugegeben und innerhalb von 10 Sekunden vermischt (PENDRAULIK-Labormischer Type LM34, 3000U/min). Die Startzeit und Abbindezeit wurden ab Rührbeginn bestimmt.

Man erhielt Polyurethan-Schaumstoffe, deren Raumgewicht (gemäß DIN EN ISO 845), Druckverformungsrest (DVR; gemäß DIN EN ISO 1856), Stauchkraft (gemäß DIN EN ISO 3386-1-98), Stauchhärte (gemäß DIN EN ISO 3386-1-98) und Zugfestigkeit (gemäß DIN EN ISO 1798) bestimmt wurden. Die Bestimmung des DVR-Wertes erfolgte einen Tag nach Kompression unter den in der Tabelle 1 genannten Bedingungen. Zur Bestimmung der Stauchkraft-Werte wurden Probekörper mit einer Grundfläche von ca. 64 cm² hergestellt.

**Tabelle 1**

| **Beispiel** | **1*** | **2*** | **3** | **4** | **5** | **6** | **7** | **8** | **9** |
|---|---|---|---|---|---|---|---|---|---|
| Polyol 1 | 37,8 | 40,8 | 42,6 | 50 | 50 | 50 | 69,6 | | |
| Polyol 2 | 30 | 30 | 33 | 41,5 | 44,8 | 42,7 | | 95,3 | |
| Polyol 3 | | | | | | | 23 | | |
| Polyol 4 | | | | | | | | | 25 |
| Polyol 5 | | | | | | | | | 44,65 |
| Polyol 6 | | | | | | | | | 25 |
| Kettenverlängerer 1 | 30 | 27 | 22 | | | | | | |
| Kettenverlängerer 2 | | | | 4 | | | 5 | | |
| Kettenverlängerer 3 | | | | 2 | 4 | 4 | | | |
| Kettenverlängerer 4 | | | | | | | | | 1,5 |
| Katalysator 1 | 0,1 | 0,1 | 0,1 | | | | 0,3 | | |
| Katalysator 2 | 0,7 | 0,7 | 0,7 | 0,9 | | | 0,3 | 0,4 | |
| Katalysator 3 | 1,0 | 1,0 | 1,2 | 1,2 | | | 1,4 | 0,7 | |
| Katalysator 4 | | | | | | | | | 0,4 |
| Katalysator 5 | | | | | | | | | 0,2 |
| Katalysator 6 | | | | | 0,9 | | | | |
| Katalysator 7 | | | | | | 3,0 | | | |
| Stabilisator 1 | | | | | | | | 0,3 | |
| Stabilisator 2 | | | | | | | | | 0,25 |
| Wasser | 0,4 | 0,4 | 0,4 | 0,4 | 0,3 | 0,3 | 0,4 | 3,3 | 3,0 |
| Isocyanat 1 | | | | | | | 48 | | |
| Isocyanat 2 | 68 | 60 | 56 | 47 | 40 | 42 | | | |
| Isocyanat 3 | | | | | | | | 64 | |
| Isocyanat 4 | | | | | | | | | 40 |
| Freischaumdichte [kg m⁻³] | 200 | 218 | 220 | 190 | 221 | 224 | 230 | 58 | 30 |
| Startzeit [s] | 10 | 10 | 10 | 10 | 10 | 10 | 10 | 8 | 10 |
| Abbindezeit [s] | 40 | 40 | 40 | 40 | 40 | 40 | 40 | 40 | 60 |
| DVR (40%,25°C,5min) [%] | 7,5 | 0,4 | 0 | 0 | 0 | 0 | 0 | 0 | 0 |
| Stauchkraft (10%) [N] | 3300 | 1300 | 740 | 96 | 147 | 70 | 73 | 23 | 11 |
| Stauchhärte (10%) [kPa] | 675 | 376 | 197 | 27 | 23 | 11 | 21 | 4,8 | 2,3 |
| Zugfestigkeit [MPa] | 1,23 | 0,95 | 0,76 | 0,32 | 0,23 | 0,29 | 0,48 | 0,17 | 0,10 |

In allen Beispielen 1 bis 9 wurde eine Kennzahl von 100 eingestellt. In den Vergleichsbeispielen 1* und 2* erhielt man Schaumstoffe mit bleibender Verformung (DVR > 0,01%). Diese Schaumstoffe sind für die Verfestigung von Schottersteinen für Schotterkörper nicht geeignet. In den Beispielen 5 und 6 wurden einbaubare Katalysatoren verwendet, so dass Schaumstoffe mit einem geringen Anteil an emittierbaren beziehungsweise mobilisierbaren Inhaltsstoffen erhalten werden.

Mit den Reaktionsgemischen der erfindungsgemäßen Beispiele 3 bis 9 können Schotterkörper auch langfristig hervorragend stabilisiert werden.

## Patentansprüche

1. Verfahren zur Herstellung von Schotterkörpern für den Gleisbau und Straßenbau und Deichbau, wobei
1) Schottersteine zu einem Schotterkörper aufgeschüttet werden und
2) zwischen die aufgeschütteten Schottersteine ein Reaktionsgemisch zur Herstellung eines Polyurethanschaumstoffes appliziert wird, wobei das Reaktionsgemisch erhältlich ist aus
a) ein oder mehreren Isocyanatverbindungen aus der Gruppe bestehend aus Polyisocyanaten mit einem NCO-Gehalt von 28 bis 50 Gew.-% und NCO-Prepolymeren mit einem NCO-Gehalt von 10 bis 48 Gew.-% aus Polyisocyanaten mit einem NCO-Gehalt von 28 bis 50 Gew.-% und Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 oder Gemischen daraus und
b) einer Polyolkomponente bestehend aus einem oder mehreren Polyetherpolyolen mit einer Hydroxylzahl von 6 bis 112 und einer Funktionalität von 1,8 bis 8 in Gegenwart von
c) 0 bis 26 Gew.-%, bezogen auf die Reaktionskomponenten b) bis g), eines oder mehrerer Kettenverlängerungsmittel mit einer Hydroxyl- oder Aminzahl von 245 bis 1850 und einer Funktionalität von 1,8 bis 8,
d) 0,05 bis 5 Gew.-%, bezogen auf die Reaktionskomponenten b) bis g), eines oder mehrerer Treibmittel,
e) 0 bis 5 Gew.-%, bezogen auf die Reaktionskomponenten b) bis g), eines oder mehrerer Katalysatoren,
f) 0 bis 50 Gew.-%, bezogen auf die Reaktionskomponenten b) bis g), eines oder mehrerer Füllstoffe und
g) 0 bis 25 Gew.-%, bezogen auf die Reaktionskomponenten b) bis g), eines oder mehrerer Hilfs- und/oder Zusatzstoffe,
wobei die Kennzahl des Reaktionsgemisches im Bereich von 70 und 130 liegt.

2. Verfahren zur Herstellung von Schotterkörpern für den Gleis- und Straßenbau und Deichbau gemäß Anspruch 1, wobei bevorzugt 0 bis 5 Gew.-%, bezogen auf die Reaktionskomponenten b) bis g), eines oder mehrerer Katalysatoren mit primären und/oder sekundären Hydroxyl- und/oder Aminogruppen eingesetzt werden.

3. Schotterkörper aus Polyurethan-Schaumstoff und Schottersteinen, wobei der zwischen den Schottersteinen befindliche Polyurethanschaumstoff erhältlich ist aus
a) ein oder mehreren Isocyanatverbindungen aus der Gruppe bestehend aus Polyisocyanaten mit einem NCO-Gehalt von 28 bis 50 Gew.-% und NCO-Prepolymeren mit einem NCO-Gehalt von 10 bis 48 Gew.-% aus Polyisocyanaten mit einem NCO-Gehalt von 28 bis 50 Gew.-% und Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 oder Gemischen daraus und
b) einer Polyolkomponente bestehend aus einem oder mehreren Polyetherpolyolen mit einer Hydroxylzahl von 6 bis 112 und einer Funktionalität von 1,8 bis 8 in Gegenwart von
c) 0 bis 26 Gew.-%, bezogen auf die Reaktionskomponenten b) bis g), eines oder mehrerer Kettenverlängerungsmittel mit einer Hydroxyl- oder Aminzahl von 245 bis 1850 und einer Funktionalität von 1,8 bis 8,
d) 0,05 bis 5 Gew.-%, bezogen auf die Reaktionskomponenten b) bis g), eines oder mehrerer Treibmittel,
e) 0 bis 5 Gew.-%, bezogen auf die Reaktionskomponenten b) bis g), eines oder mehrerer Katalysatoren,
f) 0 bis 50 Gew.-%, bezogen auf die Reaktionskomponenten b) bis g), eines oder mehrerer Füllstoffe und
g) 0 bis 25 Gew.-%, bezogen auf die Reaktionskomponenten b) bis g), eines oder mehrerer Hilfs- und/oder Zusatzstoffe,
wobei die Kennzahl des Reaktionsgemisches im Bereich von 70 und 130 liegt.

4. Schotterkörper gemäß Anspruch 3, wobei der Polyurethanschaumstoff eine Freischaumdichte von 20 bis 800 kg/m³ (gemessen gemäß DIN EN ISO 845), eine Stauchkraft (bei 10 % Stauchung) von mindestens 10,0 N (gemessen gemäß DIN EN ISO 3386-1-98), eine Stauchhärte (bei 10 % Stauchung) von mindestens 1,0 kPa (gemessen gemäß DIN EN ISO 3386-1-98), eine Zugfestigkeit von mindestens 0,1 MPa (gemessen gemäß DIN EN ISO 1798) und einen Druckverformungsrest (DVR; 40 %; 25°C; 5 min.) von höchstens 0,01 % (gemessen gemäß DIN EN ISO 1856) aufweist.

5. Verwendung der Schotterkörper aus Polyurethanschaumstoff und Schottersteinen gemäß Anspruch 3 beim Gleis- und Straßenbau und Deichbau.

## Claims

1. Process for the production of ballast for railway track laying, road construction and dam construction, wherein
1) ballast stones are spread out to form ballast and
2) a reaction mixture for the preparation of a polyurethane foam is applied between the spread ballast stones, the reaction mixture being obtainable from
a) one or more isocyanate compounds from the group comprising polyisocyanates with an NCO content of 28 to 50 wt.% and NCO prepolymers with an NCO content of 10 to 48 wt.%, consisting of polyisocyanates with an NCO content of 28 to 50 wt.% and polyetherpolyols with a hydroxyl number of 6 to 112, polyoxyalkylenediols with a hydroxyl number of 113 to 1100 or alkylenediols with a hydroxyl number of 645 to 1850, or mixtures thereof, and
b) a polyol component consisting of one or more polyetherpolyols with a hydroxyl number of 6 to 112 and a functionality of 1.8 to 8, in the presence of
c) 0 to 26 wt.%, based on reaction components b) to g), of one or more chain extenders with a hydroxyl or amine number of 245 to 1850 and a functionality of 1.8 to 8,
d) 0.05 to 5 wt.%, based on reaction components b) to g), of one or more blowing agents,
e) 0 to 5 wt.%, based on reaction components b) to g), of one or more catalysts,
f) 0 to 50 wt.%, based on reaction components b) to g), of one or more fillers and
g) 0 to 25 wt.%, based on reaction components b) to g), of one or more auxiliary substances and/or additives,
the index of the reaction mixture ranging from 70 to 130.

2. Process for the production of ballast for railway track laying, road construction and dam construction according to Claim 1 wherein preferably 0 to 5 wt.%, based on reaction components b) to g), of one or more catalysts having primary and/or secondary hydroxyl and/or amino groups is used.

3. Ballast consisting of polyurethane foam and ballast stones, wherein the polyurethane foam located between the ballast stones is obtainable from
a) one or more isocyanate compounds from the group comprising polyisocyanates with an NCO content of 28 to 50 wt.% and NCO prepolymers with an NCO content of 10 to 48 wt.%, consisting of polyisocyanates with an NCO content of 28 to 50 wt.% and polyetherpolyols with a hydroxyl number of 6 to 112, polyoxyalkylenediols with a hydroxyl number of 113 to 1100 or alkylenediols with a hydroxyl number of 645 to 1850, or mixtures thereof, and
b) a polyol component consisting of one or more polyetherpolyols with a hydroxyl number of 6 to 112 and a functionality of 1.8 to 8, in the presence of
c) 0 to 26 wt.%, based on reaction components b) to g), of one or more chain extenders with a hydroxyl or amine number of 245 to 1850 and a functionality of 1.8 to 8,
d) 0.05 to 5 wt.%, based on reaction components b) to g), of one or more blowing agents,
e) 0 to 5 wt.%, based on reaction components b) to g), of one or more catalysts,
f) 0 to 50 wt.%, based on reaction components b) to g), of one or more fillers and
g) 0 to 25 wt.%, based on reaction components b) to g), of one or more auxiliary substances and/or additives,
the index of the reaction mixture ranging from 70 to 130.

4. Ballast according to Claim 3 wherein the polyurethane foam has a free-rise density of 20 to 800 kg/cm³ (measured according to DIN EN ISO 845), a compressive force (at 10% compression) of at least 10.0 N (measured according to DIN EN ISO 3386-1-98), a compression hardness (at 10% compression) of at least 1.0 kPa (measured according to DIN EN ISO 3386-1-98), a tensile strength of at least 0.1 MPa (measured according to DIN EN ISO 1798) and a compression set (CS; 40%; 25°C; 5 min) of at most 0.01% (measured according to DIN EN ISO 1856).

5. Use of the ballast consisting of polyurethane foam and ballast stones according to Claim 3 in railway track laying, road construction and dam construction.

## Revendications

1. Procédé pour la préparation de corps de ballast pour les construction de voies ferrées et construction de routes et construction de digues, dans lequel
1) des cailloux de ballast sont remblayés en un corps de ballast et
2) un mélange réactionnel destiné à la préparation d'une mousse de polyuréthane est appliqué entre les cailloux de ballasts remblayés, le mélange réactionnel étant obtenu à partir de
a) un ou plusieurs composés isocyanates du groupe constitué de polyisocyanates avec une teneur NCO de 28 à 50 % en poids et de prépolymères NCO avec une teneur NCO de 10 à 48 % en poids de polyisocyanates avec une teneur NCO de 28 à 50 % en poids et de polyétherpolyols avec un indice hydroxyle de 6 à 112, de polyoxyalkylènediols avec un indice hydroxyle de 113 à 1 100 ou d'alkylènediols avec un indice hydroxyle de 645 à 1 850 ou de mélanges de ceux-ci et
b) un constituant polyol constitué d'un ou plusieurs polyétherpolyols avec un indice hydroxyle de 6 à 112 et une fonctionnalité de 1,8 à 8, en présence
c) de 0 à 26 % en poids, rapporté aux constituants réactionnels b) à g), d'un ou plusieurs agents d'allongement de chaîne avec un indice hydroxyle ou amine de 245 à 1 850 et une fonctionnalité de 1,8 à 8,
d) de 0,05 à 5 % en poids, rapporté aux constituants réactionnels b) à g), d'un ou plusieurs agents propulseurs,
e) de 0 à 5 % en poids, rapporté aux constituants réactionnels b) à g), d'un ou plusieurs catalyseurs,
f) de 0 à 50 % en poids, rapporté aux constituants réactionnels b) à g), d'une ou plusieurs charges et
g) de 0 à 25 % en poids, rapporté aux constituants réactionnels b) à g), d'un ou plusieurs auxiliaires et/ou additifs,
la constante du mélange réactionnel se trouvant dans un domaine de 70 à 130.

2. Procédé pour la production de corps de ballasts pour les construction de voies ferrées et de routes et construction de digues selon la revendication 1, dans lequel on utilise de préférence de 0 à 5 % en poids, rapporté aux constituants réactionnels b) à g), d'un ou plusieurs catalyseurs avec des groupes hydroxyles et/ou amino primaires et/ou secondaires.

3. Corps de ballast constitués de mousse de polyuréthane et de cailloux de ballast, dans lesquels la mousse de polyuréthane se trouvant entre les cailloux de ballast est obtenue à partir de
a) un ou plusieurs composés isocyanates du groupe constitué de polyisocyanates avec une teneur NCO de 28 à 50 % en poids et de prépolymères NCO avec une teneur NCO de 10 à 48 % en poids de polyisocyanates avec une teneur NCO de 28 à 50 % en poids et de polyétherpolyols avec un indice hydroxyle de 6 à 112, de polyoxyalkylènediols avec un indice hydroxyle de 113 à 1 100 ou d'alkylènediols avec un indice hydroxyle de 645 à 1 850 ou de mélanges de ceux-ci et
b) un constituant polyol constitué d'un ou plusieurs polyétherpolyols avec un indice hydroxyle de 6 à 112 et une fonctionnalité de 1,8 à 8 en présence
c) de 0 à 26 % en poids, rapporté aux constituants réactionnels b) à g), d'un ou plusieurs agents d'allongement de chaîne avec un indice hydroxyle ou amine de 245 à 1 850 et une fonctionnalité de 1,8 à 8,
d) de 0,05 à 5 % en poids, rapporté aux constituants réactionnels b) à g), d'un ou plusieurs agents propulseurs,
e) de 0 à 5 % en poids, rapporté aux constituants réactionnels b) à g), d'un ou plusieurs catalyseurs,
f) de 0 à 50 % en poids, rapporté aux constituants réactionnels b) à g), d'une ou plusieurs charges et
g) de 0 à 25 % en poids, rapporté aux constituants réactionnels b) à g), d'un ou plusieurs auxiliaires et/ou additifs,
la constante du mélange réactionnel se trouvant dans un domaine de 70 à 130.

4. Corps de ballast selon la revendication 3, dans lequel la mousse de polyuréthane présente une densité de mousse libre de 20 à 800 kg/m³ (mesurée selon DIN EN ISO 845), une force de déformation sous compression (pour une déformation sous compression de 10 %) d'au moins 10,0 N (mesurée selon DIN EN ISO 3386-1-98), une dureté de déformation sous compression (pour une déformation sous compression de 10 %) d'au moins 1,0 kPa (mesurée selon DIN EN ISO 3386-1-98), une résistance à la traction d'au moins 0,1 MPa (mesurée selon DIN EN ISO 1798) et une déformation résiduelle sous compression (DVR ; 40 % ; 25°C ; 5 min) d'au plus 0,01 % (mesurée selon DIN EN ISO 1856).

5. Utilisation des corps de ballast constitués de mousse de polyuréthane et de cailloux de ballast selon la revendication 3 pour la construction de voies ferrées et de routes et la construction de digues.
